# EUROPÄISCHE PATENTANMELDUNG

(11) **EP 1 138 364 A1**
(43) Veröffentlichungstag der Anmeldung: **04.10.2001**
(21) Anmeldenummer: 01107553.8
(22) Anmeldetag: 26.03.2001
(51) Int. Cl.: B01D 29/90

(54) **Verfahren und Vorrichtung zur dynamischen Filtration**

(30) Priorität: 27.03.2000 DE 10014586
(71) Anmelder: Slowik, Günter, 06217 Merseburg (DE); Kohlmann, Jürgen, 06217 Geusa (DE)
(72) Erfinder: Slowik, Günter, 06217 Merseburg (DE); Kohlmann, Jürgen, 06217 Geusa (DE)
(74) Vertreter: Tragsdorf, Bodo, Dipl.-Ing.

(57) **Zusammenfassung**

Die Erfindung betrifft ein Verfahren zur dynamischen Filtration zur Abtrennung einer dispersen Phase aus einem mehrphasigen Fluidstrom, dessen Trägerphase flüssig und/oder gasförmig ist sowie eine Filtrationsvorrichtung zur Durchführung des Verfahrens.

Ausgehend von den Nachteilen des bekannten Standes der Technik soll ein Filtrationsverfahren geschaffen werden, bei dem die erforderliche Überströmgeschwindigkeit ohne zusätzliche mechanische Einbauten erreicht wird und mit dem es möglich ist, eine gleichmäßigere Überströmgeschwindigkeit über der Membran bzw. Filterfläche zu erzeugen und die Bildung der Deckschicht im Betriebszustand gezielt zu beeinflussen. Ferner soll eine zur Durchführung des Verfahrens geeignete Filtrationsvorrichtung geschaffen werden.

Als Lösung wird vorgeschlagen, daß zur Erzeugung der Überströmung der der Konzentratkammer (1) zugeführte Fluidstrom aus einem Strom oder mehreren Teilströmen (T1, T2, T3, T4) gebildet wird, wobei entweder der einzige Strom oder mindestens einer der Teilströme (T1, T2, T3, T4) in tangentialer Strömungsrichtung am Außenmantel (7) der Konzentratkammer (1) in diese eingeleitet wird und der Konzentratstrom zentral oder beabstandet zur Mittelachse der Konzentratkammer (1) aus dieser abgeführt wird.

## Beschreibung

Die Erfindung betrifft ein Verfahren zur dynamischen Filtration zur Abtrennung einer dispersen Phase aus einem mehrphasigen Fluidstrom, dessen Trägerphase flüssig und/oder gasförmig ist sowie eine Filtrationsvorrichtung zur Durchführung des Verfahrens.

Zweck der dynamischen Filtration ist es, den Deckschichtaufbau während der Filtration durch geeignete Maßnahmen zu begrenzen, wie z. B. durch rotierende Schaber, die Erzeugung von Scher- und Auftriebskräften an den abgelagerten Partikeln durch bewegte Einbauteile oder die Erzeugung von Scher- und Auftriebskräften durch eine Überströmung der Membran, als sogenannte Querstromfiltration oder Crossflow-Filtration (Chem.-Ing.-Tech. 60 (1988) Nr. 3, S. 155 bis 161). Bei der Crossflow-Filtration werden zwei Hauptströmungen kreuzweise zueinander gebildet, der Filtratstrom durch das Filtermedium und die Überströmung parallel zum Filtermedium.
Ein wesentlicher Parameter zur Beeinflussung der Filtrationsleistung ist die Überströmgeschwindigkeit. Je höher diese ist, um so besser ist die erzielbare Filtrationsleistung, wobei sich jedoch gleichzeitig ein höherer Druckabfall über die Länge des Filtrationsmoduls einstellt. Schwankende Durchsätze wirken sich nachteilig auf den Rücktransport von abgelagerten Teilchen in die Kernströmung aus und beeinträchtigen die Filtrationsleistung.
Aus der DE 42 07 614 C1 sind ein dynamisches Filtrationsverfahren und die dazugehörige Membranfiltrationsvorrichtung als Rotations-Scherspalt-Filter-Trennvorrichtung bekannt. In der Konzentratkammer ist eine rotierbare Scheibe angeordnet, deren Rotation eine Relativbewegung des Fluids in dem Spalt entlang der Membran erzeugt, um ein Verstopfen der Membranporen zu verringern oder sogar zu verhindern. Durch Veränderung der Drehzahl der Scheibe kann die Überströmgeschwindigkeit unabhängig vom Gesamtfluiddurchsatz beeinflußt werden. Der erforderliche Einbau einer rotierbaren Scheibe zur Erzeugung der Überströmgeschwindigkeit stellt einen erheblichen zusätzlichen Aufwand dar, der zu erhöhten Kosten für die Trennvorrichtung führt. Außerdem besteht ein weiterer Nachteil darin, daß während der induzierten Relativbewegung des Fluids sich die Tangentialgeschwindigkeitskomponente nicht gleichmäßig über der gesamten Filterfläche ausbildet. Es entsteht ein Starrkörperwirbel, der bei großem Radius der Scheibe hohe tangentiale Geschwindigkeiten aufweist, die in Richtung zur Achse immer mehr abnehmen. Der Fluidstrom wird der Konzentratkammer über eine zentrale Hohlwelle zugeführt. Die ausschließliche axiale Geschwindigkeitskomponente muß durch die rotierende Scheibe in eine die Membran überstreichende Parallelströmung umgewandelt werden. Von außen während des Betriebes beeinflußbare Faktoren bilden somit lediglich die zuzuführende Filtratmenge sowie die Rotationsgeschwindigkeit der Scheibe.

Der Erfindung liegt die Aufgabe zugrunde, ein verbessertes dynamisches Filtrationsverfahren zu schaffen, bei dem die erforderliche Überströmgeschwindigkeit ohne zusätzliche mechanische Einbauten erreicht wird und mit dem es möglich ist, eine gleichmäßigere Überströmgeschwindigkeit über der Membran bzw. Filterfläche zu erzeugen und die Bildung der Deckschicht im Betriebszustand gezielt zu beeinflussen. Ferner soll eine zur Durchführung des Verfahrens geeignete Filtrationsvorrichtung geschaffen werden.

Erfindungsgemäß wird die Aufgabe durch die im Anspruch 1 angegebenen Merkmale gelöst. Geeignete Ausgestaltungen der Verfahrensweise sind Gegenstand der Ansprüche 2 bis 5. Eine Filtrationsvorrichtung zur Durchführung des Verfahrens ist Gegenstand des Anspruches 6. In den Ansprüchen 7 bis 11 sind vorteilhafte Varianten der Filtrationsvorrichtung angegeben.

Der zu filtrierende Fluidstrom wird in tangentialer Strömungsrichtung am Außenmantel der rotationssymmetrischen Konzentratkammer in diese eingeleitet und der Konzentratstrom zentral oder beabstandet zur Mittelachse der Konzentratkammer aus dieser abgeleitet. Die Konzentratkammer wird von außen beginnend zur Achse hin durchströmt. Dabei entsteht außer dem durch das Filtermedium fließenden Filtratstrom noch eine parallel zum Filtermedium verlaufende Überströmung. Die radiale Geschwindigkeitskomponente der Überströmgeschwindigkeit ergibt sich aus dem Fluiddurchsatz und ist vergleichbar mit der axialen Geschwindigkeit in Rohrmodulen. Wesentlich ist jedoch, daß durch die tangentiale Einleitung des Fluidstromes in die Konzentratkammer zusätzlich eine tangentiale Geschwindigkeitskomponente entsteht, die beim absoluten Betrag der Überströmgeschwindigkeit wirksam wird. Gleichzeitig wirken somit eine radiale und eine tangentiale Geschwindigkeitskomponente. Der Fluidstrom wird am Außenmantel der Konzentratkammer tangential zugeführt und bewirkt dadurch bei abnehmendem Radius ein Ansteigen der tangentialen Geschwindigkeitskomponente, wobei tangential im Sinne eines Zylinderkoordinatensystems für die Konzentratkammer zu verstehen ist. Es kommt wegen der Reibungswirkungen jedoch nicht zu einem idealen Anstieg der tangentialen Geschwindigkeitskomponente (als Potentialwirbel) zur Achse hin, sondern es stellt sich eine über den Radius fast gleichmäßig verlaufende Überströmgeschwindigkeit ein. Diese reicht im Normalfall aus, die Bildung der Deckschicht auf dem Filter in erforderlichem Maße zu begrenzen. In an sich bekannter Weise befindet sich auf dem Filter, z.B. einer Membran, stets eine in der Höhe definierte Deckschicht. Diese bildet zusammen mit dem eigentlichen Filter das Filtermedium. Für eine gewünschte hohe Filtrationsleistung ist es unter anderem notwendig, die Deckschichthöhe auf einem vorbestimmten Wert konstant zu halten. Infolge der im Vergleich zu den bekannten Lösungen wesentlich gleichmäßigeren Überströmgeschwindigkeit kann auf den Einsatz zusätzlicher rotierender Einbauten in der Konzentratkammer, wie z. B. Scheiben oder Rührorgane, verzichtet werden. Zweck derartiger Einbauten ist es, eine zusätzliche tangentiale Geschwindigkeitskomponente zu induzieren.
Der Fluidstrom kann außerhalb der Konzentratkammer in mehrere Teilströme geteilt werden, wobei es zweckmäßig ist, wenn mindestens zwei der Teilströme in tangentialer Strömungsrichtung in die Konzentratkammer eingeleitet werden. In bestimmten Anwendungsfällen kann es auch ausreichend sein, wenn außer den zwei tangentialen Teilströmen noch weitere Teilströme nicht in tangentialer Richtung, zum Beispiel radial, eingeleitet werden. Bei Vorhandensein von zwei tangentialen Teilströmen eröffnet sich die Möglichkeit, die Überströmgeschwindigkeit unabhängig vom Durchsatz des Fluidstromes einzustellen. Das Verhältnis der beiden Teilströme kann durch ein Stellorgan, zum Beispiel ein Ventil oder eine drehzahlgesteuerte Pumpe, das in eine der Zuführungen eingebunden ist, während des Betriebes verändert werden. Auf die Bildung der Deckschicht kann somit gezielt Einfluß genommen werden. Dies ist ein wesentlicher Vorteil, vor allem im Vergleich zu den bekannten Crossflow-Filteranlagen, die als Rohr, Platten oder Spiralmodul ausgeführt sind.
Als besonders vorteilhaft hat sich eine Ausführungsvariante erwiesen, bei der der Fluidstrom auf vier Teilströme aufgeteilt wird, die alle in tangentialer Strömungsrichtung in einer Ebene liegend in die Konzentratkammer eingeleitet werden, wobei jeweils zwei Teilströme unterschiedliche Querschnittsflächen an der Eintrittsstelle in die Konzentratkammer aufweisen. Die Zuführungen für die vier Teilströme sind im gleichen Winkelabstand zueinander, also jeweils im Winkel von 90°, angeordnet. Die im Querschnitt identischen Zuführungen befinden sich an einander gegenüberliegenden Stellen des Außenmantels der Konzentratkammer. Die Zuführungen mit den identischen Querschnittsflächen sind jeweils an eine gemeinsame Leitung angeschlossen, die von einer Gesamtfluidstromleitung abzweigt. In die Abzweigleitung, die mit den Zuführungen mit der größeren Querschnittsfläche verbunden ist, ist ein Stellventil eingebunden. Die Teilstromverhältnisse zwischen den beiden Teilströmen mit der größeren und kleineren Volumenmenge können somit während des Betriebes der Filteranlage verändert werden, um auf die Bildung der Deckschicht wirksam Einfluß zu nehmen.
Erforderlichenfalls kann auch einer der anderen Teilströme durch ein zusätzlich eingebautes Stellventil oder eine Pumpe verändert werden. Die Abzweigungen für die Teilstromleitungen können auch innerhalb des Gehäuses einer Filtrationsanlage angeordnet sein.
Die rotationssymmetrische Konzentratkammer kann verschiedenartig ausgebildet sein. Die Höhe sollte in Abhängigkeit vom Radius konstant bleiben. Denkbar sind auch Ausführungsvarianten bei denen die Höhe veränderlich ist, z. B abnimmt oder zunimmt, d.h. der Deckel und/oder Boden vorzugsweise konkav oder konvex ausgebildet sind bzw. die Form eines Kegels aufweisen. Das Verhältnis der Höhe h an der Eintrittsstelle der Zuführungen sollte zum Radius der Konzentratkammer in einem Bereich zwischen 1 bis 15. liegen. Der Querschnitt der Zuführungen ist bevorzugterweise rechteckig, wobei die einzelnen Zuführungen die gleiche Höhe aufweisen, und sich die Querschnitte der Zuführungen lediglich in ihren Breitenmaßen unterscheiden können. Die Höhe der Zuführungen sollten in einem bestimmten Verhältnis zur Höhe der Konzentratkammer an den Eintrittsstellen stehen, das 0,5 bis 1 beträgt. Ferner sollte das Verhältnis der Höhe der Konzentratkammer an den Eintrittsstellen zur Höhe der Konzentratkammer an der Konzentratabführung in einem Bereich von 0,25 bis 4 liegen. Weiterhin ist es zweckmäßig, zwischen dem Radius der Konzentratkammer und dem Radius der Konzentratabführung ein Verhältnis von größer als 5 einzuhalten.

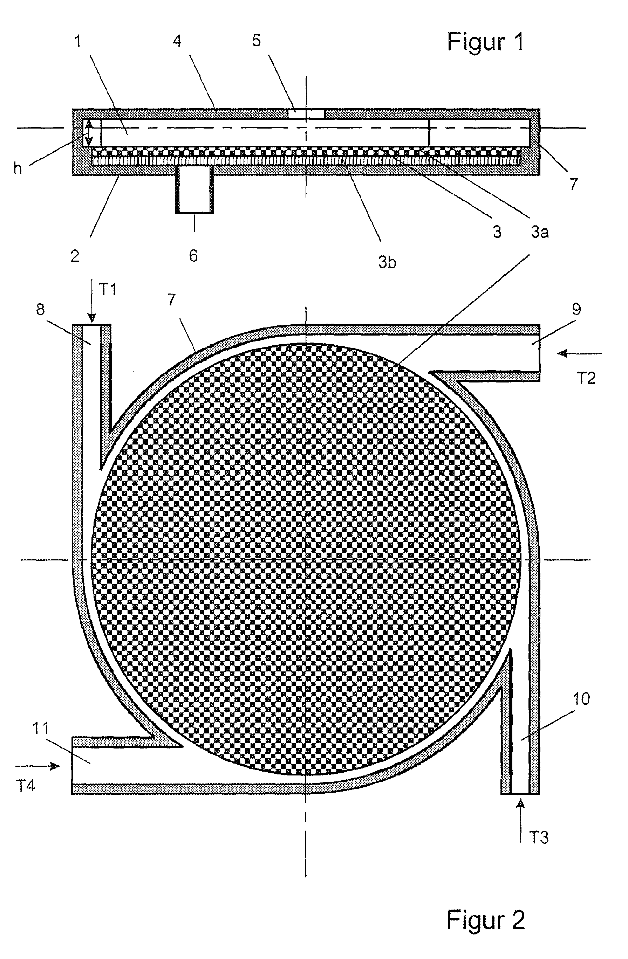

Die Erfindung soll nachstehend an einem Beispiel näher erläutert werden. In der zugehörigen Zeichnung zeigen
- Fig. 1: eine Filtrationsvorrichtung als vereinfachte Längsschnittdarstellung,
- Fig. 2: eine Querschnittdarstellung gemäß der Linie A-A in Fig. 1,
- Fig. 3: die Schaltungsanordnung für die Zuführungen zu der in Fig. 1 gezeigten Vorrichtung und
- Fig. 4: ein Diagramm mit Meßergebnissen zu Filterwiderstandswerten bei unterschiedlicher Volmunenstromleitung.

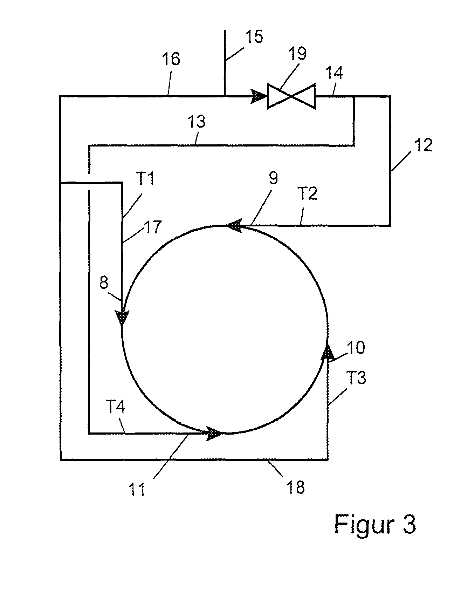

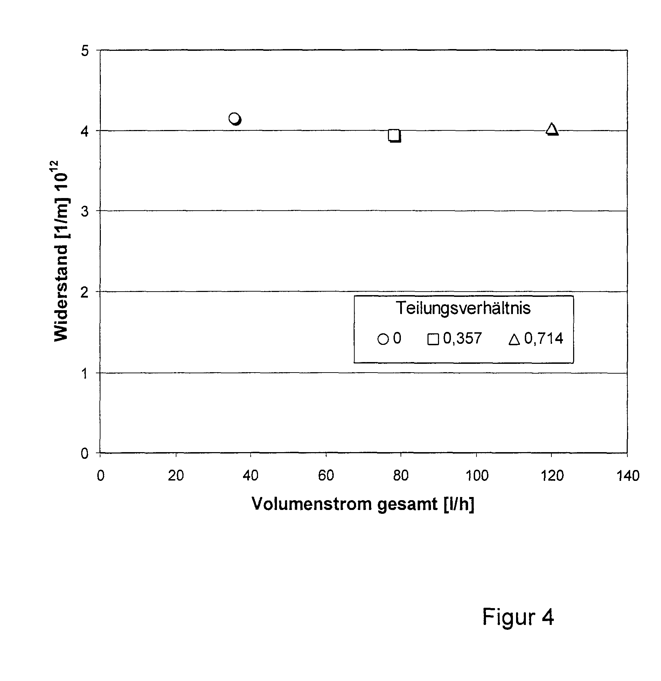

Die gezeigte Filtrationsvorrichtung besteht aus einer rotationssymmetrischen Konzentratkammer 1, in der ein den Boden 2 bedeckendes Filtermedium 3, bestehend aus einem Filtersieb 3a und einer darunter befindlichen Drainageschicht 3b aus porösem Material. Die sich auf dem Filtersieb während des Betriebes bildende Deckschicht ist nicht mit dargestellt. Im Deckel 4 der Konzentratkammer 1 befindet sich der Konzentratstromaustritt 5, der mit der Mittelachse der Konzentratkammer fluchtet, also zentral angeordnet ist. Der Filtratstromauslauf 6 ist im Boden 2 angeordnet. Die Konzentratkammer 1, die zugleich als Drallkammer ausgelegt ist, besitzt, bezogen auf ihren Radius nur eine geringe Höhe h. Das Verhältnis von Radius zu Höhe h sollte in einem Bereich von 1 bis 15 liegen. Am Außenmantel 7 der Konzentratkammer sind vier Zuführungen 8, 9, 10 und 11 tangential angeordnet, die gewährleisten, daß die einzelnen Teilströme T1, T2, T3 und T4 in tangentialer Strömungsrichtung in die Konzentratkammer 1 eingeleitet werden. Die Zuführungen 8, 9, 10 und 11 liegen in einer Ebene, die sich genau in Höhe des Filtermediums befindet. Die Eintrittsstelle der Zuführungen in die Konzentratkammer 1 sollte möglichst nur einen geringen Abstand zum Filtermedium 3 aufweisen. Um auf die Bildung der Deckschicht wirksam Einfluß nehmen zu können, darf der Abstand der Zuführungen 8, 9, 10 und 11 zum Filtermedium 3 nicht zu groß sein. Die Dimensionen der Konzentratkammer sind z. B. folgende: Radius: 35 mm und Höhe: 5 mm.
Die im Querschnitt rechteckigen Zuführungen 8, 9,10,11 besitzen eine einheitliche Höhe von 5 mm und eine Breite von 5 mm (die Zuführungen 9 und 11) bzw. 2 mm (die Zuführungen 8 und 10).
Die einzelnen Zuführungen 8, 9, 10 und 11 sind im gleichen Winkelabstand zueinander angeordnet, wobei jeweils die beiden im Querschnitt identischen Zuführungen 8, 10 und 9, 11 einander gegenüberliegen. Die zugehörigen weiteren Anschlüsse zu den Zuführungen 8, 9, 10 und 11 sind in der Schaltungsanordnung gemäß der Fig. 3 gezeigt. Die beiden Zuführungen 9, 11, die mit dem größeren Querschnitt, sind über die Leitungen 12 und 13 mit einer Verzweigungsleitung 14 verbunden, die an die Gesamtfluidstromleitung 15 angeschlossen ist. Von dieser zweigt eine zweite Verzweigungsleitung 16 ab, die mit den beiden Leitungen 17 und 18 verbunden ist, die an die Zuführungen 8, 10, die mit der kleineren Querschnittsfläche, angeschlossen sind. In die Verzweigungsleitung 14, die mit den Zuführungen mit der größeren Querschnittsfläche in Verbindung steht, ist ein Stellventil 19 eingebunden. Mittels des Stellventils 19 kann während des Betriebes das Teilstromverhältnis zwischen der Summe der Teilströme T2 und T4 und der Summe der Teilströme T1 und T3 verändert werden.
Die Verfahrensweise nach Inbetriebnahme der Filtrationsvorrichtung ist folgende.
Zur Trennung einer Suspension wird diese ausgehend von der Gesamtfluidstromleitung 15 über die Verzweigungsleitungen 12, 13, 14, 16, 17 und 18 in die vier Teilströme T1, T2, T3 und T4 geteilt, die in tangentialer Strömungsrichtung in die Konzentratkammer 1 eingeleitet werden. Die in diese in einem gleichen Winkelabstand zueinander in einer Ebene in Höhe des Filtermediums eintretenden Teilströme werden als vier getrennte Rotationsströmungen spiralförmig in Richtung zum Zentrum, zur Mittelachse der Konzentratkammer bewegt. Der Druck in der Konzentratkammer wird in an sich bekannter Weise auf einem solchen Niveau gehalten, das größer ist als der Druck im Filtratablauf 6. Demzufolge strömt das feststofffreie Fluid durch die Membran 3a und die Drainageschicht 3b und sammelt sich im Filtratablauf 6. Der Konzentratstrom wird durch den im Deckel 4 befindlichen Austrittstutzen 5 abgezogen. Auf der Membran 3a wird eine Deckschicht aus dem Feststoff aufgebaut, die in den Figuren der Zeichnung nicht näher dargestellt ist. Die Deckschicht wird infolge der erzeugten Überströmung auf einer bestimmten Höhe gehalten, die durch die Größe der in der Konzentratkammer 1 herrschenden Überströmgeschwindigkeit beeinflußt wird und von dieser abhängt. Die vorliegende Erfindung schlägt zusätzlich noch geeignete Maßnahmen zur Veränderung oder Konstanthaltung der Überströmgeschwindigkeit während des Betriebes einer Filteranlage vor. Bei sinkenden Fluiddurchsätzen kann die Überströmgeschwindigkeit aufrechterhalten werden, indem die Teilströme T1 und T3 vergrößert werden, die über die Zuführungen 8 und 10 mit der kleineren Querschnittsfläche in die Konzentratkammer 1 geleitet werden. Dies erfolgt durch Drosselung des in die Abzweigleitung 14 (Fig. 3) eingebundenen Stellventils 19. Bei steigenden Fluiddurchsätzen verfährt man genau umgekehrt. Zur Veränderung der Höhe der Deckschicht kann die Menge bzw. Durchsatzleistung an Filtratstrom gemessen werden. Ist die gemessene Menge des Filtratstromes unterhalb des vorgegebenen Sollwertes, so kann verfahrensgemäß die Überströmgeschwindigkeit erhöht werden. Als alternative Meßgröße anstelle des Filtratstromdurchsatzes kann auch die transmembrane Druckdifferenz herangezogen werden, die ebenfalls eine Kenngröße für die Deckschichthöhe bildet, unter der Voraussetzung, daß alle anderen Bedingungen konstant sind. Dabei muß der absolute Druck in der Konzentratkammer berücksichtigt werden, der durch ein Drosselorgan im Konzentratablauf ebenfalls verändert werden kann oder mit der Gesamtmenge des Fluidstromes veränderbar ist. Abschließend sind in einem nachfolgenden Diagramm (Fig. 4) die Filterwiderstandswerte bei unterschiedlicher Volumenstromteilung an Hand durchgeführter Meßergebnisse dargestellt. Auf der Abszisse sind die Werte für den Gesamtvolumenstrom aufgetragen, der als Fluidstrom in tangentialer Strömungsrichtung in die Konzentratkammer eingeleitet wurde. Veränderlicher Parameter ist das Teilungsverhältnis des Gesamtfluidstromes. Dieses Teilungsverhältnis ist der Quotient aus dem Volumenstrom, der durch die Zuführungen 9,11 strömt, die in der Summe im Vergleich zu den beiden anderen Zuführungen 8, 10 die größere Querschnittsfläche aufweisen, und dem Gesamtfluidstrom. Wie in dem Diagramm dargestellt, ist das Teilungsverhältnis gleich Null, wenn der Volumenstrom insgesamt am niedrigsten ist. Der Fluidstrom wird in diesem Fall nur durch die Zuführungskanäle 8 und 10, die mit dem kleinsten Querschnitt, in die Konzentratkammer eingeleitet. Auch bei anderen Teilungsverhältnissen ist der Filterwiderstand etwa gleichgroß, wie aus dem Diagramm hervorgeht, da die Überströmgeschwindigkeit in etwa gleich bleibt. Damit ist belegt, daß in der gleichen Konzentratkammer bei unterschiedlichem Gesamtfluidstrom durch Änderung des Teilungsverhältnisses der Teilströme der gleiche Filterwiderstand erreichbar ist. Es läßt sich somit das gleiche Filtrationsregime bei schwankenden Durchsätzen aufrechterhalten.

## Patentansprüche

1. Verfahren zur dynamischen Filtration von fluiden Stoffen, wobei der mehrphasige Fluidstrom einer rotationssymmetrischen Konzentratkammer zugeführt wird, und infolge der anliegenden Druckdifferenz durch ein die Grund- und/oder Deckfläche der Konzentratkammer bedeckendes Filtermedium geleitet und dabei in einen Filtrat- und Konzentratstrom getrennt wird und die Bildung einer Deckschicht auf dem Filter durch eine erzeugte Überströmung beeinflußt wird, **dadurch gekennzeichnet, daß** zur Erzeugung der Überströmung der der Konzentratkammer (1) zugeführte Fluidstrom aus einem Strom oder mehreren Teilströmen (T1, T2, T3, T4) gebildet wird, wobei entweder der einzige Strom oder mindestens einer der Teilströme (T1, T2, T3, T4) in tangentialer Strömungsrichtung am Außenmantel (7) der Konzentratkammer (1) in diese eingeleitet wird und der Konzentratstrom zentral oder beabstandet zur Mittelachse der Konzentratkammer (1) aus dieser abgeführt wird.

2. Verfahren nach Anspruch 1, **dadurch gekennzeichnet, daß** bei einer Aufteilung des Fluidstromes auf mehrere Teilströme mindestens zwei Teilströme tangential in die Konzentratkammer (1) eingeleitet werden.

3. Verfahren nach Anspruch 1, **dadurch gekennzeichnet, daß** der Fluidstrom auf vier Teilströme (T1, T2, T3, T4) aufgeteilt wird, die jeweils tangential in die Konzentratkammer (1) eingeleitet werden, wobei jeweils zwei Teilströme unterschiedliche Querschnittsflächen an der Eintrittsstelle in die Konzentratkammer (1) aufweisen.

4. Verfahren nach einem der Ansprüche 1 bis 3, **dadurch gekennzeichnet, daß** die einzelnen Teilströme (T1, T2, T3, T4) durch Abzweigungen (12,13,14) von einer Gesamtstromleitung (15) gebildet werden.

5. Verfahren nach einem der Ansprüche 1 bis 4, **dadurch gekennzeichnet, daß** das Stellorgan (19) in die Zuführung (14), die an der Eintrittsstelle in die Konzentratkammer (1) den größeren Querschnitt aufweist, oder in die Abzweigung (14) eingebunden wird, die mit den Zuführungen (9, 11) verbunden ist, die in der Summe die größere Querschnittsfläche an der Eintrittsstelle in die Konzentratkammer (1) aufweisen.

6. Filtrationsvorrichtung, insbesondere zur Durchführung des Verfahrens nach mindestens einem der vorgenannten Ansprüche, bestehend mindestens aus einer rotationssymmetrischen Konzentratkammer (1), in der ein die Grund- und/oder die Deckfläche (2, 4) bedeckendes Filtermedium (3) angeordnet ist, mit mindestens einer Zuführung für den Fluidstrom sowie einer Konzentratstrom- (5) und einer Filtratstromabführung (6), **dadurch gekennzeichnet, daß** eine oder mehrere Zuführungen (8, 9, 10, 11) für den Fluidstrom angeordnet sind, wobei mindestens eine der Zuführungen (8, 9, 10, 11) als tangentialer Einlauf an der Mantelfläche (7) der Konzentratkammer (1) angeordnet ist und die Konzentratstromabführung (5) entweder zentral oder beabstandet zur Mittelachse der Konzentratkammer (1) angeordnet ist.

7. Filtrationsvorrichtung nach Anspruch 6, **dadurch gekennzeichnet, daß** an der Mantelfläche (7) der Konzentratkammer (1) mehrere als tangentialer Einlauf ausgebildete Zuführungen (8, 9, 10, 11) angeordnet sind.

8. Filtrationsvorrichtung nach einem der Ansprüche 6 oder 7, **dadurch gekennzeichnet, daß** die in mindestens eine der tangentialen Zuführungen (8, 9, 10, 11) außerhalb der Konzentratkammer (1) ein Stellorgan (19) eingebunden ist.

9. Filtrationsvorrichtung nach einem der Ansprüche 6 bis 8, **dadurch gekennzeichnet, daß** die Zuführungen (8, 9, 10, 11) von einer Gesamtstromleitung (15) oder von in die Gesamtstromleitung eingebundenen Verzweigungsleitungen (12, 12, 14, 16, 17, 18) abzweigen.

10. Filtrationsvorrichtung nach einem der Ansprüche 6 bis 9, **dadurch gekennzeichnet, daß** das Filtermedium aus mehreren in paralleler Schaltung angeordneten Filtermodulen besteht.

11. Filtrationsvorrichtung nach einem der Ansprüche 6 bis 10, **dadurch gekennzeichnet, daß** eine Meßeinrichtung zur Bestimmung der Filtrationsleistung angeordnet ist, die über eine Regeleinheit mit den in den Zuführungsleitungen eingebundenen Stellorganen (19) verbunden ist.
